(19) Europäisches Patentamt
European Patent Office
Office européen des brevets

(11) Veröffentlichungsnummer: **0 206 144**
**B1**

# (12) EUROPÄISCHE PATENTSCHRIFT

(45) Veröffentlichungstag der Patentschrift: **25.04.90**

(51) Int. Cl.⁴: **C23C 22/78,** C23F 11/14, C23G 1/00, G01N 21/00

(21) Anmeldenummer: **86108024.0**

(22) Anmeldetag: **12.06.86**

(54) **Wässrige Zusammensetzungen für den Hilite- und Flux-Prozess und ihre Verwendung.**

(30) Priorität: **20.06.85 DE 3521952**

(43) Veröffentlichungstag der Anmeldung:
**30.12.86 Patentblatt 86/52**

(45) Bekanntmachung des Hinweises auf die Patenterteilung:
**25.04.90 Patentblatt 90/17**

(84) Benannte Vertragsstaaten:
**AT BE DE FR GB IT NL**

(56) Entgegenhaltungen:
**EP-A- 0 020 042**
**EP-A- 0 099 598**
**AT-B- 347 753**
**DE-A- 2 426 114**
**DE-B- 1 129 354**
**DE-B- 1 254 938**
**GB-A- 849 110**
**GB-A- 1 042 690**
**US-A- 4 073 618**
**US-A- 4 329 396**
**US-A- 4 414 125**

**Patent Abstracts of Japan. Field vol.9 no.88 17.4.85. S 105c 276**
**Patent Abstracts of Japan Field vol.8 no 30 8.2.84 S 65c 209**

(73) Patentinhaber: **Henkel Kommanditgesellschaft auf Aktien, Postfach 1100 Henkelstrasse 67, D-4000 Düsseldorf-Holthausen(DE)**

(72) Erfinder: **Geke, Jürgen, Dr., Stoffeler Damm 108, D-4000 Düsseldorf(DE)**
Erfinder: **Zange, Bernhard, Einsteinstasse 6, D-4000 Düsseldorf(DE)**

(56) Entgegenhaltungen: (Fortsetzung)
**Patent Abstracts of Japan Field vol. 6 no.127 13.7.82 S. 29 C 113**
**Patent Abstracts of Japan Field, vol.6 no. 197 6.10.82. S. 158 C 128**
**Patent Abstracts of Japan Field vol. 6 no. 102 11.6.82 S.88 C 107**
**Patent Abstracts of Japan Field vol. 5 no. 168 27.10.81. S. 27 C 77**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 206 144 B1

## Beschreibung

Die Erfindung betrifft wässrige Zusammensetzungen für den Hilite- und Flux-Prozeß und ihre Verwendung.

Metalloberflächen aus Eisen oder Stahl, beispielsweise für die Verwendung in der Herstellung von Automobilkarossen geeignete Metalloberflächen, werden vor dem Phosphatierprozeß einer visuellen Kontrolle unterzogen. Dabei sollen Beschädigungen der Oberfläche oder Materialunebenheiten festgestellt und Teile mit unerwünschter Beschaffenheit ausgesondert werden, da sich die angegebenen Unregelmäßigkeiten nicht nur auf die Güte der korrosionsinhibierenden Phosphatierschicht auswirken, sondern auch Störungen in den nachfolgenden Schutzschichten, beispielsweise im Lack, bewirken.

Die Automobilindustrie verwendet bisher zur visuellen Kontrolle metallischer Oberflächen, Kohlenwasserstoffgemische (Benzine) und wässrige Formulierungen, die große Mengen organischer Lösungsmittel und Nitritsalze enthalten. Die die genannten Komponenten enthaltenden wässrigen Formulierungen werden auf die Metalloberfläche aufgebracht. Es soll sich ein geschlossener Flüssigkeitsfilm bilden, der Unregelmäßigkeiten auf der Metalloberfläche leicht erkennen läßt. Eine visuelle Kontrolle von Eisen- und Stahloberflächen wird dadurch erleichtert.

Ein Nachteil dieser im sogenannten "Hilite"-Verfahren verwendeten Lösungsmittelformulierungen liegt darin, daß die Arbeitskräfte, die die Metallflächen zu kontrollieren haben, permanent den organischen Lösungsmitteldämpfen ausgesetzt sind. Die mitunter notwendige Berührung der Metallflächen sorgt zudem für Hautkontakt mit den Formulierungen, was aufgrund der Lösungsmittelanteile und des Nitritgehaltes ein weiteres gesundheitliches Risiko bedingt. Die genannten Bestandteile machen zudem eine aufwendige Reinigung der Abwässer vor dem Ablassen in die Kanalisation notwendig, da weder organische Lösungsmittel, insbesondere Kohlenwasserstoffe, noch Nitrit in Abwässer gelangen dürfen. Die mit den Formulierungen auf der Basis Wasser/organische Lösungsmittel/Nitrit erhaltenen Hilite-Filme weisen zudem auf manchen Metalloberflächen keine genügende Filmkohärenz auf, was die visuelle Kontrolle der Flächen erschwert.

Bei der Kontrolle metallischer Oberflächen mit Hilfe des Flux-Prozesses bedient man sich der Tatsache, daß sich Eisenspäne im Magnetfeld ausrichten. Metallaoberflächen werden mit einer Flüssigkeit besprüht bzw. begossen, die feine Eisenspäne beigemengt enthält. Risse in der Metalloberfläche werden dadurch angezeigt, daß sich die Eisenspäne oberhalb der Rißstelle unregelmäßig ausrichten. Für den Flux-Prozeß werden in der Regel wässrige Formulierungen verwendet. Nachteilig an diesen Systemen ist, daß sich meist nur Filme mit geringer Kohärenz bilden, die keine gute Kontrolle der metallischen Oberflächen gestatten. Zudem erwiesen sich solche Formulierungen in vielen Fällen als ausgesprochen korrosionsfördernd, was auf die Qualität der nachfolgend aufgebrachten Beschichtungsmaterialien starken Einluß hat. Die visuelle Oberflächenkontrolle stellt zudem nur eine von mehreren Stufen der Vorbereitung für den eigentlichen Beschichtungsprozeß dar; in die nachgeschalteten Prozeßstufen wird bei herkömmlicher Verfahrensweise immer wieder Material eingeschleppt, das die Schaumbildung oder andere unerwünschte Begleiterscheinungen fördert.

Aufgabe der vorliegenden Erfindung war es, wässrige Zusammensetzungen für den Hilite- und Flux-Prozeß zur Verfügung zu stellen, die weder Kohlenwasserstoffe oder Chlorkohlenwasserstoffe oder andere ökologisch bedenkliche organische Lösungsmittel noch Nitrit enthalten. Da eine Applikation mitunter auch manuell erfolgt, mußte auch auf eine dermatologisch einwandfreie Formulierung geachtet werden. Außerdem sollte sich mit Hilfe der Produkte auf metallischen Oberflächen sofort nach der Applikation ein kohärenter, transparenter und blasenfreier Flüssigkeitsfilm erzeugen lassen. Die Verträglichkeit aller Komponenten der Formulierungen mit UV-aktiven Wirkstoffen, die die Anwendungsbreite noch verbessern könnten, war sicherzustellen.

Die Behebung der genannten Nachteile gelingt überraschend dann, wenn man für den Hilite- oder Flux-Prozeß wässrige Zusammensetzungen verwendet, die organische Korrosionsinhibitoren, Carbonsäuren, Glycerine, Polyalkohole, Polyethylenglykole und biologisch abbaubare Tenside enthalten. Den erfindungsgemäßen Formulierungen können gegebenenfalls UV-aktive Wirkstoffe, Bunt- bzw. Leichtmetallinhibitoren und gegebenenfalls Solubilisatoren zugesetzt werden.

Die Erfindung betrifft somit wässrige, je ein oder mehrere Komponenten aus den Gruppen Korrosionsinhibitoren, Carbonsäuren, Glycerine, Alkohole bzw. Polyethylenglykole und Tenside enthaltende Zusammensetzungen, die dadurch gekennzeichnet sind, daß sie als organische Korrosionsinhibitoren Alkanolamine in einer Menge von 5 bis 40 Gew.-%, als Carbonsäuren Zimtsäure und/oder lineare oder verzweigte aliphatische Carbonsäuren der allgemeinen Formel (I)

$C_mH_{2m+1}COOH$ (I)

und/oder aromatische Carbonsäuren der allgemeinen Formel (II)

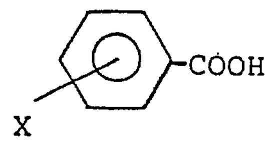 (II)

in denen X für -H, $-NO_2$, -COOH, -OH, $-SO_3H$ oder einen linearen oder verzweigten Alkylrest $C_nH_{2n+1}$ steht und m ganze Zahlen von 5 bis 17 und n ganze Zahlen von 1 bis 4 bedeuten können, in einer Menge von 5 bis 25 Gew.-%, Glycerine in einer Menge von 3 bis 50 Gew.-%, als Alkohole zweiwertige Alkohole und/oder Polyethylenglykole in einer Menge von 10 bis 70 Gew.-%, als Tenside kationische und/oder nichtionische Tenside in einer Menge von 2 bis 10 Gew.-% und gegebenenfalls UV-aktive Wirkstoffe in einer Menge von weniger als 0,5 Gew.-%, Buntmetallinhibitoren in einer Menge von 0,1 bis 0,5 Gew.-%, Leichtmetallinhibitoren in einer Menge von 0,5 bis 5 Gew.-% und/oder Solubilisatoren in einer Menge von 0,1 bis 10 Gew.-%, enthalten, wobei Wasser in einer Menge enthalten ist, die die Summe der Mengen aller anderen Komponenten zu 100 Gew.-% ergänzt.

Die Erfindung betrifft außerdem die Verwendung derartiger wässriger Zusammensetzungen für Lösungen zur visuellen Oberflächenkontrolle metallischer Oberflächen und deren Reinigung.

Als Korrosionsinhibitoren enthalten die erfindungsgemäßen wässrigen Zusammensetzungen Alkanolamine, beispielweise Monoethanolamin, Diethanolamin und/oder Triethanolamin. Bevorzugt beträgt der Gehalt an derartigen organischen Korrosionsinhibitoren 10 bis 25 Gew.-%.

Als Carbonsäuren kommen außer Zimtsäure insbesondere lineare oder verzweigte aliphatische Carbonsäuren mit 8 bis 12 C-Atomen und/oder aromatische Carbonsäuren in Frage. Als aliphatische Carbonsäuren werden beispielsweise Capronsäure, Caprylsäure, Caprinsäure, Laurinsäure, Myristinsäure, Palmitinsäure, Stearinsäure, Isohexansäure, 2-Ethylhexansäure oder Isononansäure verwendet. Es sind jedoch auch andere lineare oder verzweigte aliphatische Carbonsäuren für die wässrigen Zusammensetzungen gemäß der Erfindung geeignet. Als aromatische Carbonsäuren sind insbesondere Benzoesäure, Nitrobenzoesäure, Phthalsäure, Isophthalsäure, Terephthalsäure, Salicylsäure, p-Hydroxybenzoesäure, o-Toluylsäure oder p-Toluylsäure zu nennen. Die bevorzugten Mengen an den genannten Carbonsäuren betragen 10 bis 15 Gew.-%.

Glycerine sind in den wässrigen Formulierungen bevorzugt in Mengen von 10 bis 30 Gew.-% enthalten. Dabei finden in den meisten Fällen Glycerin oder Polyglycerin Verwendung.

Als Alkohole enthalten die wässrigen Zusammensetzungen gemäß der Erfindung zweiwertige Alkohole, Alkoholether und Polyethylenglykole. Als Alkohole werden Diethylenglykol, Propylenglykol und 2-Methyl-2,4-pentandiol bevorzugt. Zusätzlich zu oder anstelle der genannten zweiwertigen Alkohole können auch Alkoholether, wie alkoxylierte Alkylenglykole, beispielsweise ethoxyliertes Ethylenglykol, verwendet werden. Die Molekularmassen dieser Alkoholether liegen im Bereich zwischen 300 und 1000.

Als Alkoholkomponente für die wässrigen Zusammensetzungen sind auch mit Vorteil Polyethylenglykole verwendbar. Die Molekularmassen dieser Verbindungen liegen im Bereich zwischen 200 und 1000. Die Mengen aller genannten Alkoholkomponenten liegen bevorzugt im Bereich zwischen 25 und 60 Gew.-%.

Gemäß der Erfindung sind als Tensidkomponente alle biologisch abbaubaren, spritzfähigen bzw. schaumarmen kationischen und/oder nichtionischen Tenside bzw. Tensidmischungen geeignet. Ihre Menge liegt bevorzugt im Bereich zwischen 5 und 7 Gew.-%.

Als nichtionische Tenside finden dabei bevorzugt Alkohole oder Alkylphenole Verwendung, die durch Umsetzung mit Ethylenoxid und/oder Propylenoxid ethoxyliert bzw. propoxyliert wurden. Es sind jedoch auch mit Vorteil Polyethylenglykolether der Formel

$R^1O-(CH_2CH_2O)_p-R^2$

verwendbar, in der $R^1$ einen geradkettigen oder verzweigten Alkyl- oder Alkenylrest mit 8 bis 18 C-Atomen, $R^2$ einen Alkylrest mit 4 bis 8 C-Atomen und p eine Zahl von 7 bis 12 bedeuten. Außerdem werden auch Polyethylenglykolether verwendet, die durch Anlagerung von 4 bis 20 Gew.-Teilen Ethylenoxid an 1 Gew.-Teil Polyglycerin mit einer Hydroxylzahl im Bereich von 900 bis 1200 und anschließende Veretherung der freien Hydroxylgruppen mit gradkettigen oder verzweigten Alkylhalogeniden mit 4 bis 8 C-Atomen erhältlich sind. Die beiden letztgenannten Gruppen nichtionischer Tenside werden allgemein als "endgruppenverschlossene Mischethertenside" bezeichnet.

Als kationische Tenside werden bevorzugt Ammoniumverbindungen verwendet, in denen mindestens zwei Substituenten am Stickstoff Alkylrest mit 1 bis 3 C-Atomen, bevorzugt Methylreste, und mindestens ein weiterer Rest ein gegebenenfalls substituierter Alkylrest mit 8 bis 12 C-Atomen ist. Die Anionen der genannten kationischen Tenside sind normalerweise Anionen von Säuren, die den quartären Ammoniumverbindungen eine gute Wasserlöslichkeit verleihen. Als kationische Tenside werden bevorzugt Lauryldimethylbenzylammoniumchlorid oder Benzyldimethyl-2-hydroxydodecyl-ammoniumisononanoat verwendet.

Die wässrigen Zusammensetzungen gemäß der vorliegenden Erfindung enthalten außerdem Wasser in einer Menge, die so bemessen ist, daß sie die Summe der Mengen aller anderen Komponenten zu 100 Gew.-% ergänzt.

Gegebenenfalls können die wässrigen Zusammensetzungen auch noch spezielle Komponenten enthalten, die dem jeweiligen Einsatzgebiet und Verwendungszweck besonders angepaßt sind. Als solche kommen z.B. UV-aktive Wirkstoffe, wie z.B. Fluorescein, Buntmetallinhibitoren, wie Tolyltriazol oder Benzotriazol, Leichtmetallinhibitoren, wie z.B. Natriumalkyletherphosphate, und/oder Solubilisatoren, wie beispielsweise Sulfonate, bevorzugt Cumolsulfonat und Ligninsulfonat, in Frage.

Die wässrigen Zusammensetzungen gemäß der Erfindung kommen als Konzentrate in den Handel, die die oben angegebene Zusammensetzung aufweisen können. Die Anwendung erfolgt jedoch in den seltensten Fällen in Konzentratform. Vielmehr werden die Konzentrate mit Wasser auf Anwendungskonzentrationen verdünnt, so daß 2 bis 20 %ige wässrige Lösungen der Konzentrate entstehen.

Derartige Lösungen können in allen Konzentrationsbereichen zur visuellen Oberflächenkontrolle von metallischen Oberflächen verwendet werden. Dies geschieht insbesondere in den einleitend unter dem Namen "Hilite-Prozeß" und "Flux-Prozeß" beschriebenen Verfahren. Das letztere Verfahren wird detailliert in der DIN-Norm 54132 beschrieben.

Die wässrigen Zusammensetzungen gemäß der Erfindung können in mehr oder weniger konzentrierter Form im Spritzverfahren, Sprühverfahren oder manuell auf die Metalloberflächen appliziert werden. Mit Hilfe dieser Lösungen ist eine einwandfreie visuelle Kontrolle der Metalloberflächen in den genannten Verfahren möglich. Es bildet sich in allen Fällen ein kohärenter Flüssigkeitsfilm aus. Dabei werden die Metalloberflächen nicht nur von zurückgebliebenen Verunreinigungen befreit, sondern auch gegen Korrosion geschützt. In die nachgeschaltenen Prozeßstufen werden dabei keine schaumbildenden oder in anderer Weise störenden Flüssigkeitsreste eingeschleppt. Selbst beim Einsatz in Spritzanlagen ist die Verwendung der Lösungen bereits ab Raumtemperatur ohne störende Schaumbildung möglich. Zudem bestehen bei Verwendung der erfindungsgemäßen wässrigen Zusammensetzungen keine gesundheitlichen oder ökologischen Risiken.

Die Erfindung wird durch die nachstehenden Beispiele näher erläutert.

A. Herstellung der erfindungsgemäßen Mittel

Unter Rühren wurden bei Raumtemperatur die in den Einzelbeispielen genannten Komponenten sukzessive zu der vorgelegten Menge Wasser zugegeben. Dabei wurde in allen Fällen Leitungswasser verwendet.

B. Prüfmethode

1. Blechpräparation.

Stahlbleche der Qualität St 1405 (15 x 30 cm) wurden in einer Laborspritzanlage oder von Hand mit einer 1,5 bis 2 %igen Neutralreinigerlösung bei 50 bis 60°C gereinigt und alternativ mit Kalt- oder Warmluft getrocknet.

2. Produktapplikation.

Auf das gereinigte und abgekühlte Blech wurde das erfindungsgemäße Produktkonzentrat in verdünnter wässriger Lösung aufgetragen. Es wurden folgende Applikationsweisen gewählt:

- Aufsprühen mittels Handsprühflasche, Konzentration der wässrigen Zusammensetzungen: 5 bis 10 Gew.-%; oder
- Auftragen von Hand mit einem weichen Lappen oder Schwamm, Konzentration der wässrigen Zusammensetzungen: 10 bis 15 Gew.-%; oder
- Aufspritzen, Konzentration der wässrigen Zusammensetzungen 2 bis 4 Gew.-%.

3. Beurteilung der Oberflächen.

Die erfindungsgemäßen Mittel gewährleisteten eine gleichmäßige Benetzung der Metalloberflächen. Die gebildeten Produktfilme waren über eine Zeitdauer von mindestens 6 Minuten vollständig kohärent. Die Metalloberflächen blieben während dieser Zeit naß und glänzend, so daß eine visuelle Kontrolle der Oberflächenbeschaffenheit leicht erfolgen konnte.

4. Korrosionsschutz.

Die mit den erfindungsgemäßen wässrigen Zusammensetzungen ausgebildeten Produktfilme schützten die behandelten Metalloberflächen temporär gegen Korrosion. Der Korrosionsschutz war auf den verwendeten Stahlplatten in einer Laboratmosphäre mindestens über 2 Wochen wirksam.

5. Entfernbarkeit.

Der Film der durch die erfindungsgemäßen wässrigen Zusammensetzungen auf den Metalloberflächen ausgebildet worden war, ließ sich mühelos mit den entsprechenden Reinigern einer Entfettungs- oder Phosphatierlinie oder mit Neutralreinigern entfernen, wie sie z.B. nach dem Flux-Prozeß angewendet werden.

C. Komponenten der wässrigen Zusammensetzungen (Mengenangaben in Gew.-%)

Beispiel 1

(Geeignet für die manuelle oder Sprühapplikation)
10 % Zimtsäure
35 % ethoxyliertes Ethylenglykol, Molekularmasse 400;
7 % Polyglycerin;
15 % 2-Methyl-2,4-pentandiol;
10 % Diethanolamin;
0,2 % Tolyltriazol;
2 % Natriumalkyletherphosphat (Forlanit P^R);
2,5 % Triton^R DF 16 (kationisches Tensid);
2,5 % eines Anlagerungsproduktes von 3 EO und 6 PO an einen Alkohol mit 12 bis 18 C-Atomen und
15,8 % Wasser.

Beispiel 2

(Geeignet für manuelle, Sprüh- und Spritzapplikation ab Raumtemperatur)
15 % Diethanolamin;
10 % Isononansäure;
30 % Glycerin;
20 % 2-Methyl-2,4-pentandiol;
5 % Tetraethylenglykol;
4 % eines Anlagerungsproduktes von 3 EO und 6 PO an einen Alkohol mit 12 bis 18 C-Atomen;
1 % Benzyllauryldimethylammoniumchlorid;
0,0025 % Fluorescein und
14,9975 % Wasser.

Beispiel 3

(Geeignet für manuelle, Sprüh- und Spritzapplikation)
3 % Monoethanolamin;
20 % Triethanolamin;
5 % Isononansäure;
3 % Caprylsäure;
5 % 2-Ethylhexansäure;
25 % 2-Methyl-2.4-pentandiol;
10 % ethoxyliertes Ethylenglykol; Molekularmasse 400;
12 % Glycerin;
4 % eines Anlagerungsproduktes von 3 EO und 6 PO an einen Alkohol mit 12 bis 18 C-Atomen;
1 % Benzyllauryldimethylammoniumchlorid und
12 % Wasser.

Beispiel 4

(Geeignet für manuelle, Sprüh- und Spritzapplikation)
15 % Diethanolamin;
7 % Isononansäure;
3 % Benzoesäure;
16 % Glycerin;
4 % Diethylenglykol;
23 % 2-Methyl-2.4-pentandiol;
13 % ethoxyliertes Ethylenglykol, Molekularmasse 400;
4 % eines Anlagerungsproduktes von 3 EO und 6 PO an einen Alkohol mit 12 bis 18 C-Atomen;
1 % Benzyllauryldimethylammoniumchlorid;
5 % Ligninsulfonat und
9 % Wasser.

## Patentansprüche

1. Wässrige, je ein oder mehrere Komponenten aus den Gruppen Korrosionsinhibitoren, Carbonsäuren, Glycerine, Alkohole bzw. Polyethylenglykole und Tenside enthaltende Zusammensetzungen, dadurch gekennzeichnet, daß sie
(a) als organische Korrosionsinhibitoren Alkanolamine in einer Menge von 5 bis 40 Gew.-%,
(b) als Carbonsäuren Zimtsäure und/oder lineare oder verzweigte aliphatische Carbonsäuren der allgemeinen Formel (I)
$C_mH_{2m+1}COOH$ (I)
und/oder aromatische Carbonsäuren der allgemeinen Formel (II)

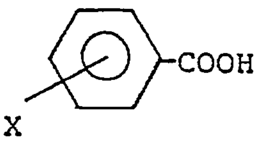

(II)

in denen X für -H, $-NO_2$, -COOH, -OH, $-SO_3H$ oder einen linearen oder verzweigten Alkylrest $C_nH_{2n+1}$ steht und m ganze Zahlen von 5 bis 17 und n ganze Zahlen von 1 bis 4 bedeuten können, in einer Menge von 5 bis 25 Gew.-%,
(c) Glycerine in einer Menge von 3 bis 50 Gew.-%,
(d) als Alkohole zweiwertige Alkohole und/oder Polyethylenglykole in einer Menge von 10 bis 70 Gew.-%,
(e) als Tenside kationische und/oder nichtionische Tenside in einer Menge von 2 bis 10 Gew.-% und gegebenenfalls
(f) UV-aktive Wirkstoffe in einer Menge von weniger als 0,5 Gew.-%, Buntmetallinhibitoren in einer Menge von 0,1 bis 0,5 Gew.-%, Leichtmetallinhibitoren in einer Menge von 0,5 bis 5 Gew.-% und/oder Solubilisatoren in einer Menge von 0,1 bis 10 Gew.-% enthalten, wobei Wasser in einer Menge enthalten ist, die die Summe der Mengen aller anderen Komponenten zu 100 Gew.-% ergänzt.

2. Wässrige Zusammensetzungen nach Anspruch 1, dadurch gekennzeichnet, daß sie Alkanolamine in einer Menge von 10 bis 25 Gew.-%, Carbonsäuren in einer Menge von 10 bis 15 Gew.-%, Glycerine in einer Menge von 10 bis 30 Gew.-%, Alkohole in einer Menge von 25 bis 60 Gew.-% und Tenside in einer Menge von 5 bis 7 Gew.-% enthalten.

3. Wässrige Zusammensetzungen nach Ansprüchen 1 und 2, dadurch gekennzeichnet, daß sie als organische Korrosionsinhibitoren Monoethanolamin, Diethanolamin und/oder Triethanolamin enthalten.

4. Wässrige Zusammensetzungen nach Ansprüchen 1 und 2, dadurch gekennzeichnet, daß sie als Carbonsäure Zimtsäure enthalten.

5. Wässrige Zusammensetzungen nach Ansprüchen 1 und 2, dadurch gekennzeichnet, daß sie als Carbonsäure lineare und verzweigte aliphatische Carbonsäuren mit 8 bis 12 C-Atomen enthalten.

6. Wässrige Zusammensetzungen nach Anspruch 5, dadurch gekennzeichnet, daß sie Caprylsäure, Caprinsäure, Laurinsäure und/oder Isononansäure als Carbonsäuren enthalten.

7. Wässrige Zusammensetzungen nach Ansprüchen 1 und 2, dadurch gekennzeichnet, daß sie Benzoesäure als Carbonsäurekomponente enthalten.

8. Wässrige Zusammensetzungen nach Ansprüchen 1 und 2, dadurch gekennzeichnet, daß sie als zweiwertige Alkohole Diethylenglykol, Propylenglykol und/oder 2-Methyl-2,4-pentandiol enthalten.

9. Wässrige Zusammensetzungen nach Ansprüchen 1 und 2, dadurch gekennzeichnet, daß sie Polyethylenglykole mit einer Molekularmasse im Bereich von 200 bis 1000 als Alkoholkomponente enthalten.

10. Wässrige Zusammensetzungen nach Ansprüchen 1 und 2, dadurch gekennzeichnet, daß sie alkoxylierte Alkylenglykole, bevorzugt ethoxylierte Ethylenglykole mit Molekularmassen im Bereich von 300 bis 1000 enthalten.

11. Verwendung der wässrigen Zusammensetzungen nach Ansprüchen 1 bis 10 zur Herstellung von Lösungen für die visuelle Oberflächenkontrolle metallischer Bauteile sowie deren Reinigung.

## Claims

1. Aqueous compositions containing one or more components from the groups consisting of corrosion inhibitors, carboxylic acids, glycerols, alcohols or polyethylene glycols and surfactants, characterized in that they contain
(a) as organic corrosion inhibitors alkanolamines in a quantity of 5 to 40% by weight,
(b) as carboxylic acids cinnamic acid and/or linear or branched aliphatic carboxylic acids corresponding to general formula (I)
$C_mH_{2m+1}COOH$ (I)
and/or aromatic carboxylic acids corresponding to general formula (II)

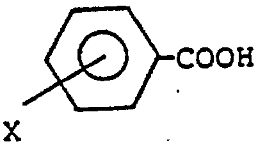

(II)

in which X represents -H, $-NO_2$, -COOH, -OH, $-SO_3H$ or a linear or branched alkyl radical $C_nH_{2n+1}$, m may be an integer of 5 to 17 and n may be an integer of 1 to 4, in a quantity of 5 to 25% by weight,
(c) glycerols in a quantity of 3 to 50% by weight,
(d) as alcohols dihydric alcohols and/or polyethylene glycols in a quantity of 10 to 70% by weight,
(e) as surfactants cationic and/or nonionic surfactants in a quantity of 2 to 10% by weight and, optionally,
(f) UV-active agents in a quantity of less than 0.5% by weight, nonferrous metal inhibitors in a quantity of 0.1 to 0.5% by weight, lightweight metal inhibitors in a quantity of 0.5 to 5% by weight and/or solubilizers in a quantity of 0.1 to 10% by weight, water being present in a quantity which makes up the sum total of the quantities of all other components to 100% by weight.

2. Aqueous compositions as claimed in claim 1, characterized in that they contain alkanolamines in a quantity of 10 to 25% by weight, carboxylic acids in a quantity of 10 to 15% by weight, glycerols in a quantity of 10 to 30% by weight, alcohols in a quantity of 25 to 60% by weight and surfactants in a quantity of 5 to 7% by weight.

3. Aqueous compositions as claimed in claims 1 and 2, characterized in that they contain monoethanolamine, diethanolamine and/or triethanolamine as organic corrosion inhibitors.

4. Aqueous compositions as claimed in claims 1 and 2, characterized in that they contain cinnamic acid as the carboxylic acid.

5. Aqueous compositions as claimed in claims 1 and 2, characterized in that they contain linear and branched aliphatic $C_{8-12}$ carboxylic acids as the carboxylic acids.

6. Aqueous compositions as claimed in claim 5, characterized in that they contain caprylic acid, capric acid, lauric acid and/or isononanoic acid as the carboxylic acids.

7. Aqueous compositions as claimed in claims 1 and 2, characterized in that they contain benzoic acid as the carboxylic acid component.

8. Aqueous compositions as claimed in claims 1 and 2, characterized in that they contain diethylene glycol, propylene glycol and/or 2-methyl-2,4-pentanediol as dihydric alcohols.

9. Aqueous compositions as claimed in claims 1 and 2, characterized in that they contain polyethylene glycols having a molecular weight of 200 to 1000 as the alcohol component.

10. Aqueous compositions as claimed in claims 1 and 2, characterized in that they contain alkoxylated alkylene glycols, preferably ethoxylated ethylene glycols, having molecular weights of 300 to 1000.

11. The use of the aqueous compositions claimed in claims 1 to 10 for the production of solutions for the visual surface inspection and cleaning of metal components.

## Revendications

1) Compositions aqueuses renfermant chacune un ou plusieurs composants choisis dans le groupe des inhibiteurs de corrosion, des acides carboxyliques, du glycérol, des alcools ou polyéthylène glycols, et des agents tensio-actifs, caractérisées en ce qu'elles contiennent :
a) comme inhibiteurs de corrosion organiques, une alcanolamine en quantité de 5 à 40 % en poids,
b) comme acides carboxyliques de l'acide cinnamique et/ou des acides carboxyliques aliphatiques linéaires ou ramifiés de formule générale (I)
$C_mH_{2m+1}COOH$ (I)
et/ou des acides carboxyliques aromatiques de formule générale (II)

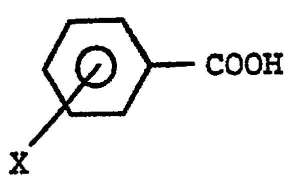

(II)

dans lesquelles X représente de l'hydrogène, $NO_2$, COOH, OH, $SO_3H$ ou un reste alcoyle linéaire ou ramifié de formule $C_nH_{2n+1}$ et m peut représenter un nombre entier allant de 5 à 17 et n, un nombre entier de 1 à 4, en quantité de 5 à 25 % en poids,
c) du glycérol en quantité de 3 à 50 % en poids,
d) comme alcools, des alcools bivalents et/ou des polyéthylèneglycols en quantité de 10 à 70 % en poids,

e) comme agents tensio-actifs des agents tensio-actifs cationiques et/ou non-ioniques en quantité de 2 à 10% en poids et, le cas échéant,

f) un agent actif sur les UV en quantité inférieure à 0,5% en poids, des inhibiteurs de métaux lourds non ferreux en quantité allant de 0,1 à 0,5% en poids, des inhibiteurs de métaux légers en quantité allant de 0,5 à 5% en poids et/ou des agents solubilisants en quantité allant de 0,1 à 10% en poids, l'eau étant contenue en une quantité qui complète la somme des quantités des autres constituants à 100% en poids.

2) Compositions aqueuses selon la revendication 1, caractérisées en ce qu'elles renferment de l'alcanolamine en quantité de 10 à 25% en poids, des acides carboxyliques en quantité de 10 à 15% en poids, du glycérol en quantité de 10 à 30% en poids, des alcools en quantité de 25 à 60% en poids et des agents tensio-actifs en quantité de 5 à 7% en poids.

3) Compositions aqueuses selon les revendications 1 et 2, caractérisées en ce qu'elles renferment comme inhibiteurs de corrosion organiques, de la monoéthanolamine, de la diéthanolamine et/ou de la triéthanolamine.

4) Compositions aqueuses selon les revendications 1 et 2, caractérisées en ce qu'elles renferment comme acide carboxylique, de l'acide cinnamique.

5) Compositions aqueuses selon les revendications 1 et 2, caractérisées en ce qu'elles renferment comme acide carboxylique, des acides carboxyliques aliphatiques linéaires ou ramifiés ayant de 8 à 12 atomes de carbone.

6) Compositions aqueuses selon la revendication 5, caractérisées en ce qu'elles renferment de l'acide caprylique, de l'acide caprique, de l'acide laurique et/ou de l'acide isononanoïque comme acides carboxyliques.

7) Compositions aqueuses selon les revendications 1 et 2, caractérisées en ce qu'elles renferment comme composant acide carboxylique, de l'acide benzoïque.

8) Compositions aqueuses selon les revendications 1 et 2, caractérisées en ce qu'elles renferment comme alcools bivalents du diéthylène glycol, du propylène glycol et/ou du 2-méthyl 2,4-pentanediol.

9) Compositions aqueuses selon les revendications 1 et 2, caractérisées en ce qu'elles renferment comme composant alcoolique des polyéthylène glycols de masse moléculaire dans la zone de 200 à 1000.

10) Compositions aqueuses selon les revendications 1 et 2, caractérisées en ce qu'elles renferment des alcoylène glycols alcoxylés, de préférence des éthylène glycols éthoxylés de masse moléculaire dans la zone de 300 à 1000.

11) Utilisation des compositions aqueuses selon les revendications 1 à 10 pour l'obtention de solutions en vue du contrôle visuel des surfaces d'éléments fabriqués ainsi que de leur nettoyage.